(19) Europäisches Patentamt / European Patent Office / Office européen des brevets

(11) **EP 4 282 726 B1**

(12) **EUROPEAN PATENT SPECIFICATION**

(45) Date of publication and mention
of the grant of the patent:
**26.06.2024 Bulletin 2024/26**

(21) Application number: **22175819.6**

(22) Date of filing: **27.05.2022**

(51) International Patent Classification (IPC):
**B60W 40/10** (2012.01)   **G06V 20/56** (2022.01)
**G06T 7/00** (2017.01)

(52) Cooperative Patent Classification (CPC):
**B60W 40/1005; G06V 20/56;** B60W 2300/14;
B60W 2420/403; B60W 2520/10; B60W 2530/201;
B60W 2530/205; B60W 2555/20; B60W 2556/45

(54) **AIR DRAG MODEL ESTIMATION USING VISUAL INFORMATION**

LUFTWIDERSTANDSMODELLSCHÄTZUNG MITTELS VISUELLER INFORMATIONEN

ESTIMATION DE MODÈLE DE TRAÎNÉE AÉRODYNAMIQUE À L'AIDE D'INFORMATIONS VISUELLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.11.2023 Bulletin 2023/48**

(73) Proprietor: **VOLVO TRUCK CORPORATION**
**405 08 Göteborg (SE)**

(72) Inventors:
• **ASKERDAL, Mikael**
**439 51 ÅSA (SE)**
• **LAINE, Leo**
**438 94 HÄRRYDA (SE)**

(74) Representative: **Kransell & Wennborg KB**
**P.O. Box 2096**
**403 12 Göteborg (SE)**

(56) References cited:
DE-A1-102019 211 753    JP-A- 2014 113 905
US-A1- 2021 197 837

## Description

## Technical field

The present invention relates to the field of (heavy) vehicle combinations and air drag. In particular, the present invention relates to estimation of an air drag model for the vehicle combination based on visual information provided by e.g. one or more images of the vehicle combination.

## Background

When driving in crosswind conditions, the air drag force acting on heavy vehicle combinations depend on the angle of air-attack. To take such air drag into account when for example estimating a power needed to propel the vehicle combination, an air drag model is used which expresses the air drag force $F_a$ as a function of various parameters such as air density $\rho$, the drag coefficient $C_d$ of the vehicle combination, the projected area $A_p$ of the vehicle combination, and e.g. the axial/longitudinal air speed $v_{ax}$. To account for crosswinds/sidewinds, the drag coefficient and/or the projected (frontal) area of the vehicle combination are assumed to depend on air-attack angle $\theta$.

To find the correct parameters for such an air drag model, wind tunnel tests are often used. Instead of finding the drag coefficient $C_d(\theta)$ and projected area $A_p(\theta)$ independently, it is often more convenient to estimate a joint drag area parameter $[C_d A](\theta)$. Wind tunnel experiments/tests may also be complemented by, or even replaced by, advanced numerical simulations (such as e.g. those based on Computational Fluid Dynamics, CFD).

The model parameters obtained from wind tunnel experiments are however only relevant as long as the exterior shape of the vehicle combination used in the wind tunnel experiments is not changed. As soon as the exterior shape of the vehicle combination changes, new wind tunnel tests and/or new numerical simulations are often required in order for the models to still remain as valid as before. As such wind tunnel tests and/or numerical simulations are often both tedious and costly, and in some situations not even feasible, the only remaining solution to find an air drag model for a new vehicle combination (having a new exterior shape) may be to perform so-called online estimation of the air drag model which includes measuring one or more relevant parameters while the vehicle combination is driving. To also estimate how the drag area depends on air-attack angle, on-line estimation techniques require access to accurate wind information while driving the vehicle combination, in order to properly capture the crosswind sensitivity of the drag area. In order for such on-line estimation to be valid, detailed knowledge about the wind that is actually affecting the vehicle combination must be known, and such knowledge may also be disturbed by e.g. various chaotic behavior of the wind caused by e.g. other vehicles driving on the same stretch of road, or similar.

A problem with the above is that a configuration of a vehicle combination will often change during a particular transport mission, i.e. by adding or removing one or more trailers or other towed vehicle units at some points along the planned route. A driver may for example be assigned the task of picking up a first trailer at point A, deliver the first trailer to point B, and then return back with another, second trailer from point B. By not knowing how to maintain a valid air drag model of the vehicle also after having changed the exterior shape, calculations (such as for energy management, cruise control, range prediction, etc.) which rely on an access to such a valid air drag model may therefore suffer. The document DE 10 2019 211753 A1 discloses a method of making rough estimates of the additional air resistance generated by a trailer coupled to a motor vehicle, but does not take e.g. crosswind into account.

There is therefore a need for an improved way of estimating air drag of/for a vehicle combination in situations when the exact configuration (e.g. the exterior shape) of the vehicle combination does not remain constant throughout a mission.

## Summary

To at least partially satisfy the above-identified need, there is provided an improved (computer-implemented) method of estimating air drag of a vehicle combination, as well as a corresponding device, vehicle or vehicle combination, computer program and computer program product as defined by the accompanying independent claims. Various embodiments of the method, device, vehicle or vehicle combination, computer program and computer program product are defined by the accompanying dependent claims.

The method includes detecting a change of an exterior shape of the vehicle combination to a new exterior shape (i.e. a change from a previous exterior shape to the new exterior shape). The method further includes, in response to detecting such a change (of the exterior shape of the vehicle), and based on one or more images of the vehicle combination captured after the change of the exterior shape (to the new exterior shape), estimating a projected area function $A_p(\theta)$ indicating how a projected area of the vehicle combination having the new exterior shap on a plane perpendicular to air-attack depends on air-attack angle $\theta$. The method also includes using the estimated projected area function to update a crosswind-sensitive air drag model (i.e. a model depending on the air-attack angle $\theta$) for the vehicle

combination.

The vehicle combination envisaged herein is e.g. a heavy vehicle combination, such as a utility vehicle combination including e.g. a towing unit and one or more trailers (towed units). That the estimated projected area function is used to "update a crosswind-sensitive air drag model" means that the crosswind-sensitive air drag model is such that it requires knowledge about such a function, and that any previously used such function is replaced by the (newly) estimated projected area function. Examples of such an air drag model will be provided further below in the detailed description.

The invention and envisaged method improves upon currently available technology in that it, by using images of the vehicle combination, allows to determine the projected area function and to update the air drag model also when the exact shape of e.g. an added trailer is not known, where e.g. tabulated values for the exact combination of towing and towed units of the vehicle combination after the change are not available or existing, and without the need for expensive and/or cumbersome wind tunnel experiments and/or numerical simulations. In addition, the envisaged method further facilitates the process in that it automatically detects the occurrence of the change, and thereafter take appropriate action to update the air drag model. This may e.g. help to unload some of the burden from the driver, and allow the driver to instead focus on other things such as driving the vehicle in a safe way.

In some embodiments of the method, the method may include initiating (e.g. causing a triggering of) a capture of the one or more images in response to the detecting. By so doing, the method may e.g. proceed without the need for the driver to intervene. Initiating the capture of the one or more images may for example be performed by sending a control signal to one or more cameras used to capture the one or more images. As will be explained later herein in more detail, one or more images of the vehicle combination can also be used for the detection itself, e.g. by comparing how the vehicle combination looks in one image with how the vehicle combination looks in another image, in order to detect whether the configuration (and thereby possibly also the exterior shape) of the vehicle combination has changed between the images. In this case, if the detecting initiates (e.g. triggers) the capturing of the one or more images used to estimate the projected area function, the one or more images used to detect the change are not the same one or more images used to estimate the projected area function. In other embodiments, the same one or more images used for detection of the change can also be the one or more images used to estimate the projected area function. Phrased differently, in some embodiments of the method, the method may further include detecting the change of the exterior shape based on the one or more images of the vehicle combination (i.e. based on the same one or more images used to estimate the projected area function). In such embodiments, no further capturing of images may sometimes be needed, and in an optimal case a single image may suffer both for detecting the change and for estimating the projected area function.

In some embodiments of the method, the method may include receiving the one or more images (used to estimate the projected area function) from at least one camera. The at least one camera may be mounted to/on the vehicle combination (e.g. to a towing unit of the vehicle combination). For example, the at least one camera may be a digital rearview camera, a digital sideview (mirror) camera, camera mounted on the roof of the towing unit and facing backwards towards the one or more trailers, or similar. In other embodiments, the one or more images may instead be received e.g. from a smartphone, a camera equipped drone/UAV, a speed camera at a route along which the vehicle combination is driving, a road toll camera, a camera used to detect overloading of heavy vehicles, a traffic camera used to assess a traffic situation along the route the vehicle combination is driving, or any other camera with which the device/computer in charge of performing the envisaged method may communicate to exchange such one or more images.

In some embodiments of the method, estimating the projected area function may include estimating a side area of the vehicle combination after the change of the exterior shape. The estimated side area may be provided as a parameter to the crosswind-sensitive air drag model. As generally used herein, a "side area" of a vehicle or vehicle combination is a side of the vehicle or vehicle combination which is not a front, rear, top or bottom side. Phrased differently, a "side area" is a surface area of a lateral side of the vehicle or vehicle combination, and can be a left side or a right side of the vehicle or vehicle combination.

In some embodiments of the method, the one or more images may depict at least part of a side of the vehicle combination. In particular, the one or more images may depict at least a side part of e.g. an added trailer.

In some embodiments of the method, estimating the projected area function may include estimating the projected area after the change of the exterior as a projected area of a cuboid on the plane perpendicular to air-attack. Two opposite faces of this cuboid may e.g. correspond to the front and back of the vehicle combination, two other opposite faces of the cuboid may correspond to the two (lateral) left/right sides of the vehicle combination, and two other opposite faces of the cuboid may e.g. correspond to the top and bottom of the vehicle combination. Phrased differently, the cuboid may be used to approximate an overall outer shape of the vehicle combination. The projected area may for example be a parallelly projected area.

In some embodiments of the method, detecting the change of the exterior shape may include at least one of receiving a signal from a user interface (such as e.g. when the user/driver pushes a button, selects/accesses/enters a particular menu option, or similar), receiving a signal indicative of a change in air deflector settings, and receiving a signal indicative of a trailer being either connected or detached from the vehicle combination. The detection of the change may e.g. be performed in combination with one or more sensors (or similar) available already for other purposes.

In some embodiments of the method, the method may further include receiving a predicted wind information pertinent to a particular route, and using the updated air drag model for at least one of energy management, range estimation, vehicle combination dynamics, and cruise control, of/for the vehicle combination along the particular route. Knowledge of both the predicted wind (e.g. speed and direction) along a route which the vehicle combination is to drive may, in combination with the updated air drag model, be used to e.g. predict an energy consumption of the vehicle combination, and/or to control the speed of the vehicle combination such that both energy and time needed to reach a destination are minimized in a multi-objective fashion. Such optimization may also be performed based on various user preferences. For example, there may be certain energy consumption constraints provided and travelling time may be optimized (e.g. minimized) subject to such constraints. Likewise, a desired travelling time may be provided in advance, and the energy consumption may be optimized (i.e. minimized) subject to such a desired travelling time.

According to a second aspect of the present invention, a device for estimating air drag of a vehicle combination is provided. The device includes processing circuitry configured to cause the device to: detect a change of an exterior shape of the vehicle combination to a new exterior shape; in response to said detection, based on one or more images of the vehicle combination captured after the change of the exterior shape (to the new exterior shape), estimate a projected area function ($A_p(\theta)$) indicating how a projected area of the vehicle combination having the new exterior shape on a plane perpendicular to air-attack depends on air-attack angle ($\theta$), and, use the estimated projected area function to update a crosswind-sensitive air drag model for the vehicle combination. The device may thus be configured to perform the method of the first aspect.

In some embodiments of the device, the processing circuitry may be further configured to cause the device to perform any embodiment of the method according envisaged and described herein.

According to a third aspect of the present invention, a vehicle or vehicle combination is provided. The vehicle or vehicle combination includes a device according to the second aspect (or any embodiments thereof), configured to perform a method according to the first aspect (or any embodiments thereof).

In some embodiments of the vehicle or vehicle combination, the vehicle or vehicle combination may include one or more cameras configured to capture and provide the one or more images used to estimate the projected area function, and/or used to detect the change of the exterior shape of the vehicle. As mentioned before, such one or more cameras may e.g. be digital rear view, side view, back up, and or overall monitoring cameras capable of capturing images of the trailers of the vehicle combination. In the envisaged method, device and vehicle or vehicle combination, it may for example be envisaged that it is easier to capture pictures of the full vehicle combination when the vehicle combination is e.g. turning (in a corner, in a circulation point/roundabout, or similar), compared to when the vehicle combination is driving in a straight line.

According to a fourth aspect of the present invention, a computer program for estimating air drag of a vehicle combination is provided. The computer program includes computer code that, when running on processing circuitry of a device (such as the device of the second aspect or embodiments thereof, e.g. when included as part of the vehicle combination), causes the device to: detect a change of an exterior shape of the vehicle combination to a new exterior shape; in response to said detection, based on one or more images of the vehicle combination captured after the change of the exterior shape, estimate a projected area function ($A_p(\theta)$) indicating how a projected area of the vehicle combination having the new exterior shape on a plane perpendicular to air-attack depends on air-attack angle ($\theta$), and, use the estimated projected area function to update a crosswind-sensitive air drag model for the vehicle combination. The computer program is thus such that it causes the device to perform a method according to the first aspect.

In some embodiments of the computer program, the computer code may be further such that it, when running on the processing circuitry of the device, causes the device to perform any embodiment of the method as envisaged herein.

According to a fifth aspect of the present invention, a computer program product is provided. The computer program product includes a computer-readable storage medium on which the computer program is stored. In some embodiments of the computer program product, the storage medium may be non-transitory.

Other objects and advantages of the present invention will be apparent from the following detailed description, the drawings and the claims. Within the scope of the present invention, it is envisaged that all features and advantages described with reference to e.g. the method of the first aspect are relevant for, apply to, and may be used in combination with also any feature and advantage described with reference to the device of the second aspect, the vehicle (combination) of the third aspect, the computer program of the fourth aspect, and the computer program product of the fifth aspect, and vice versa.

## Brief description of the drawings

Exemplifying embodiments will now be described below with reference to the accompanying drawings, in which:

Figure 1 schematically illustrates flows of various embodiments of a method of estimating air drag according to the present invention;

Figures 2A through 2D schematically illustrate various examples of one or more images which may be used to estimate a projected area function according to various embodiments of a method of air drag estimation according to the present invention, and

Figures 3B through 3C schematically illustrate how a projected (frontal) area function and side area of a vehicle combination may be estimated, according to various embodiments of the present invention, and

Figures 4A and 4B schematically illustrate various embodiments of a device (for air drag estimation) according to the present invention.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the Figures, the (absolute or relative) sizes of elements and regions may be exaggerated or understated vis-à-vis their true values for illustrative purposes and, thus, are provided to illustrate the general structures of the embodiments.

**Detailed description**

In what follows, the terms "vehicle" and "vehicle combination" will be used interchangeably, if not explicitly stated to the contrary. The same applies to the terms "wind" and "air" which, if not stated to the contrary, will be used interchangeably as well.

When a vehicle combination moves/drives relative to the surrounding wind/air, a resulting air drag force $F_a$ affecting the vehicle combination may be approximated as

$$F_a \approx 0.5\rho[C_dA](\theta)v_{ax}^2, \qquad (1)$$

where $\rho$ is air density, $[C_dA](\theta)$ is the drag area (the combined drag coefficient and frontal area of the vehicle combination) as a function of air-attack angle $\theta$, and $v_{ax}$ is the axial/longitudinal air speed.

For many transport missions, the driver may be expected to pick-up and/or drop-off one or more vehicle units (such as e.g. trailers) along the way, and such changes to the exterior shape of the vehicle may thus affect the drag area of the vehicle combination. As the drag area influences the air drag force $F_a$, and as the air drag force $F_a$ influences how hard e.g. the propulsion system of the vehicle combination must work to overcome the resistance caused by such air drag, operations such as predicting a fuel/energy consumption of the vehicle combination when driving is thus difficult if no updated air drag model can be provided. As discussed earlier herein, there are techniques available for using on-line estimation of the parameters in the air drag model, but as these techniques require knowledge about the actual air (including any turbulence and chaotic air movements caused by e.g. other vehicles), such techniques may be less reliable.

How the present invention solves the above problem will now be described in more detail with references to the drawings. The figures of these drawings show exemplifying embodiments of an envisaged improved method, device, and vehicle/vehicle combination, and also serve to illustrate the concepts of an improved computer program and computer program product as also envisaged herein. The drawings show currently preferred embodiments, but the invention may, however, be embodied in many different forms and should not be construed as limited to the embodiments set forth herein; rather, these embodiments are provided for thoroughness and completeness, and fully convey the scope of the present invention to the skilled person.

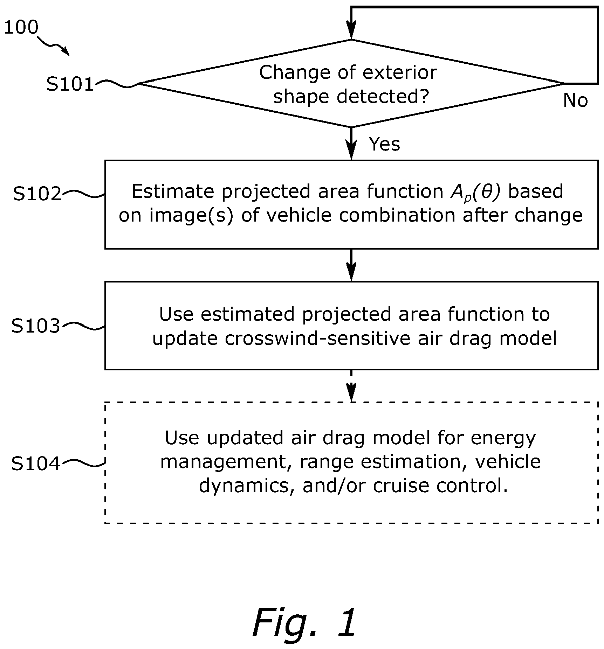

To illustrate the proposed method, reference is first made to Figure 1, which schematically illustrates a flow of an envisaged method 100. In a first step S101, the method 100 includes detecting whether there has been a change to the exterior shape of the vehicle combination. For example, the step S101 may include detecting whether a trailer has been added and/or removed to the vehicle combination, resulting in a change of the exterior shape. The change may e.g. be detected by using one or more cameras monitoring the vehicle combination and, in combination with image analysis algorithms suitable for this purpose, detect changes to the vehicle combination visually. Other examples of how to detect the change may include e.g. a user/driver pressing a button, entering/activating a particular menu option in a user interface of the vehicle combination. A still further example may include e.g. detecting whether a trailer is connected or detached from the vehicle combination (using e.g. a sensor positioned at the "fifth wheel" in case of a semi-trailer, and/or a sensor positioned at e.g. a hook used to attach/detach a trailer, or similar. Other options may include e.g. checking whether air deflector settings changes, if it is envisaged that such deflectors are configured to adapt to optimize an air flow around the vehicle combination in terms of driving efficiency. Other means of detecting if there is a change in the exterior shape of the vehicle combination are of course also possible.

If the outcome of the detection step S101 is positive ("yes"), the method 100 proceeds to a step S102. If the outcome of the detection step S101 is negative ("no"), the method 100 may repeat back to step S101 and once again check whether a change of the exterior shape is made or not. In the step S102, in response to the detection in step S101, the method 100 uses on one or more images of the vehicle combination to estimate a projected area function $A_p(\theta)$, which indicates how a projected area of the vehicle combination having the new exterior shape on a plane perpendicular to air-attack depends on air-attack angle ($\theta$). Further details about how such an estimation may be performed will be provided later herein.

In a step S103, the method 100 uses the estimated projected area function to update a crosswind-sensitive air drag model for the vehicle combination. For this step, the air drag model provided by equation (1) can be used, with the newly estimated projected area function $A_p(\theta)$ replacing any older and previously used such function.

After having estimated the (new) projected area function $A_p(\theta)$ and updated the air drag model, the method 100 may optionally proceed to a step S104 in which the updated air drag model is then used for one or more computations performed in the vehicle combination, wherein these one or more computations all rely on having access to an accurate air drag model. Examples may include e.g. energy management, range estimation, vehicle combination dynamics (including e.g. vehicle combination stability in stronger crosswinds, or similar), and e.g. cruise control. Other computations which may utilize the updated air drag model (as provided by the present invention) are of course also possible, but not described in more detail herein.

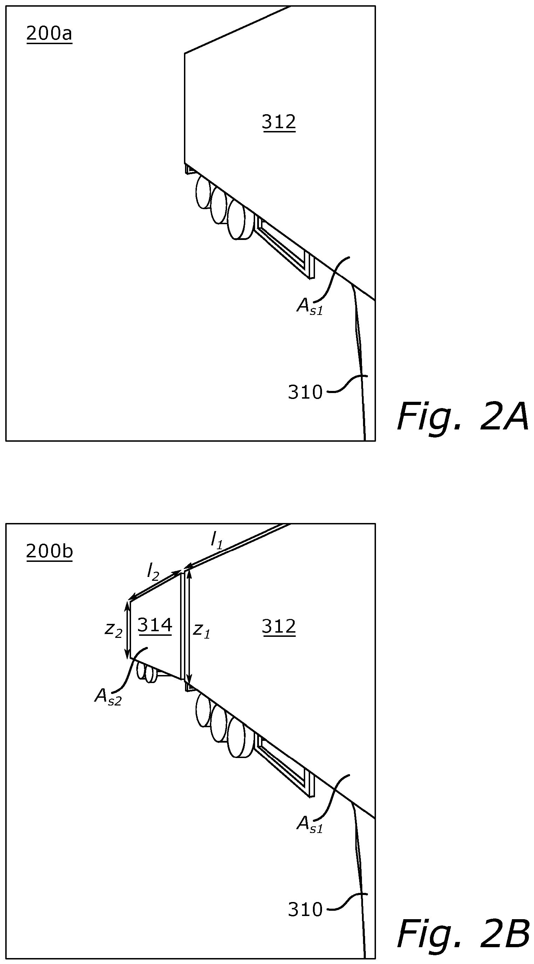

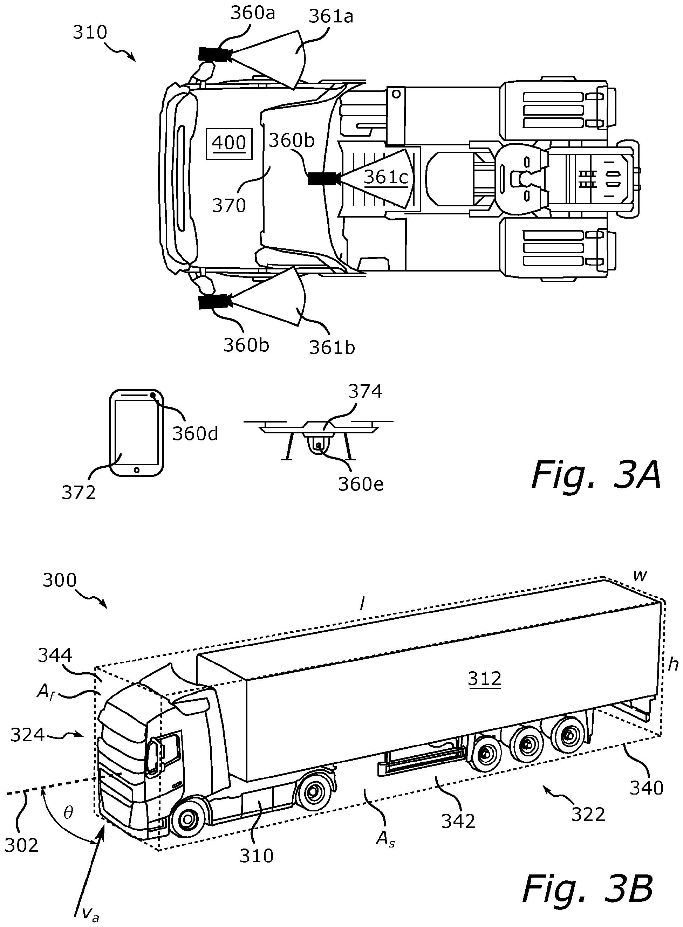

Various examples of how images of the vehicle combination can be used to estimate the projected area function $A_p(\theta)$ of the vehicle combination, will now be described in more detail with reference also to Figures 2A through 2D, and Figures 3A through 3D.

Figures 2A and 2B schematically illustrate example images 200a and 200b of a vehicle combination captured by a camera, such as e.g. a digital sideview (mirror) camera. The vehicle combination shown in image 200a includes a towing unit (e.g. a tractor unit) 310 and one trailer 312. Phrased differently, the vehicle combination shown in image 200a is a semi-trailer, wherein the trailer 312 is connected to the tractor unit 310 using a "fifth wheel". The trailer 312 has a side area $A_{s1}$, which can e.g. be assumed to be known already. For the purpose of the present example, the vehicle combination shown in image 200a is assumed to be the vehicle combination before any change to the exterior shape of the vehicle combination is made. In image 200a, the vehicle combination is currently turning slightly to the right, as can be seen by the finite articulation angle between the tractor unit 310 and the trailer 312.

Figure 200b shows the vehicle combination at a later time instance. Now, a change of the exterior shape of the vehicle combination has been made, by adding an additional trailer 314 behind the trailer 312. As envisaged herein, such a change may e.g. be detected by using image analysis to detect e.g. a number of connected trailers in each image 200a and 200b, and to note when the number of connected trailers changes. The change may e.g. also be detected by receiving a signal from the means used to connect the additional trailer 314 to the trailer 312, or similar.

The proposed method envisages that a side area $A_{s2}$ of the additional trailer is not known beforehand, but can be estimated from the image 200b. Such a procedure may e.g. include establishing a reference measure in the image 200b, i.e. at least one known distance/measure. For example, if a height $h_1$ of the trailer 312 is known in real life, measuring the distance $z_1$ in image 200b (e.g. by counting a number of pixels) allows to find such a reference measure. It is further assumed that other parameters relevant to the capturing of the image 200b are also known. Such other parameters include e.g. a size of an image sensor in the camera used to capture the image 200b (or e.g. a crop-factor and aspect ratio), a focal length of a lens used to capture the image 200b, information about a position of the camera used to capture the image 200b relative to the vehicle combination, and information about various articulation angles between e.g. the first trailer 312 and the tractor unit 310 and between e.g. the additional, second trailer 314 and the first trailer 312. It can also be assumed that a height $h_2$ of the additional trailer 314 is also similar or equal to the first trailer 312 (which is often the case). In other situations, it is assumed that also the height $h_2$ of the additional trailer 314 can also be estimated from the image 200b. If for example being able to estimate, from the image 200b and the above-mentioned other parameters, the length $l_2$ of the additional trailer 314, the side area $A_{s2}$ of the additional trailer 314 can then be estimated simply as $A_{s2} = h_2 \times l_2$. In any case, it is herein assumed that conventional technology for obtaining real-life dimensions of an object from an image depicting the object can be used for this purpose, and that the skilled person is confident in finding and applying such procedures as required.

In addition to the above, it is envisaged that also one or more homographies may also be constructed/estimated in order to account for e.g. perspective distortion or similar, to facilitate determining a side surface area of a vehicle unit (or vehicle combination) based on images capturing at least part of the side surface from an angle (such as e.g. when capturing one or more images of the side of the vehicle combination using rearview and/or sideview mirror cameras, or similar).

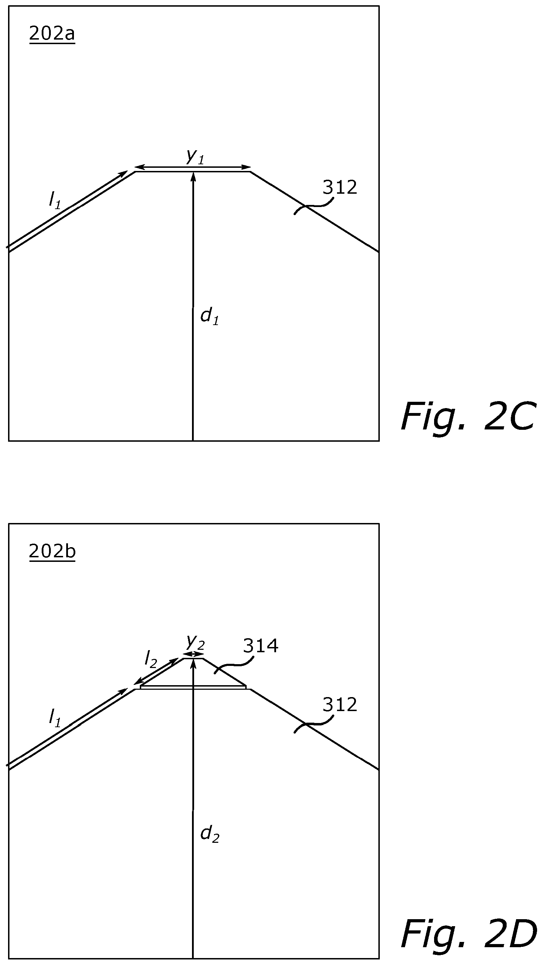

Figures 2C and 2D schematically illustrates another example of using images of the vehicle combination to estimate the side area $A_{s2}$ of an additional trailer 314. Here, the camera used to capture images of the vehicle combination is mounted on top of the vehicle combination, e.g. on a spoiler of the towing unit 310, and faces backwards such that the top of any trailers connected to the towing unit 310 are at least partially visible in the images. Figure 2C shows an image 202a wherein a single trailer 312 is added to the towing unit 310, just as in Figure 2A. It will here be assumed that a real-life width $w_1$ of the trailer 312 is known, as well as e.g. a real-life length $l_1$ of the trailer 312. In another example, the length $l_1$, may be obtained by estimating the distance $d_1$ in the image 202a, and to use knowledge about e.g. the position of the camera relative to the vehicle combination to find $l_1$ based on $d_1$. In the situation depicted in Figures 2C and 2D, the vehicle combination is currently driving in a straight line, and the task of estimating various parameters are therefore easier than the situation depicted in Figures 2A and 2B (where the vehicle combination was turning, and the articulation angles were finite).

Figure 2D shows an image 202b captured at a later time instance, where the additional trailer 314 has been added. As mentioned earlier, using image analysis and comparing the contents of the images 202a and 202b can be used to detect when the additional trailer 314 is added. Now, if the length $l_1$ of the trailer 312 is known, estimating the length $l_2$ of the additional trailer becomes a problem of estimating a distance from the camera used to capture the image 202b to the end of the additional trailer 314. If having knowledge about the size of the image sensor of the camera (or a crop-factor and aspect ratio), a focal length of the lens, and by measuring the distance $y_2$ in image 202b (i.e. by counting pixels), the distance $d_2$ from the camera to the end of the additional trailer 314 can be estimated using known procedures. By e.g. subtracting the distance $d_1$ from the distance $d_2$, and by assuming that the gap between the trailers 312 and 314 is small, an approximation of $l_2$ can thus be obtained. Once $l_2$ is known, and by assuming that e.g. a height $h_2$ of the additional trailer 314 matches a known height $h_1$ of the first trailer 312, the side area of the additional trailer 314 is given simply as $A_{s2} = h_2 \times l_2$. In summary, using any of the methods described with reference to Figures 2A through 2D, it is envisaged that an estimation of the side area $A_{s2}$ of the additional trailer (causing the change in the exterior shape of the vehicle combination) can be obtained from the images of the vehicle combination.

In general, the method as envisaged herein assumes that a known reference measure can be provided. For example, in an image captured such that it shows the vehicle combination from the side, the height of e.g. a trailer may be known and used as such a reference. The length of the vehicle combination, and in particular the length of a recently added trailer, can then be measured directly in such a sideview image. For example, if a trailer is measured as being 500 pixels high in the image and the vehicle combination is measured as being 2500 pixels long, the length of the vehicle combination (after the change) can be estimated as 2500/500 $\times$ $h$, where $h$ is a known height of the trailer being 500 pixels high. In a similar way, it is possible to calculate other measures. As shown with reference to Figures 2A and 2B, such calculations may be more complicated if the image does not depict the vehicle combination from the side, but e.g. as captured by a digital side view mirror or similar. In such a situation, information about e.g. articulation angles, camera parameters, camera orientation and placement relative to the vehicle combination, etc., may also be required before being able to calculate the necessary parameters needed to estimate the projected area function $A_p(\theta)$.

Figure 3A schematically illustrates a towing unit 310 in a top-view. The towing unit 310 is here a tractor unit configured to form part of a semi-trailer combination, where the trailer (not shown) is connected to the towing unit 310 using a "fifth wheel" 311. In other examples, the towing unit 310 may instead be a truck, wherein a trailer can be added using a tow hitch and drawbar coupling. Figure 3A illustrates various examples of how one or more cameras 360a-c may be provided on the towing unit 310. The cameras 360a-c are all facing backwards, such that each of their respective fields-of-view (FOVs) 361a-c captures at least part of the trailer(s) of the vehicle combination. For example, the towing unit 310 may be equipped with one or more cameras 360a and 360b acting as sideview mirrors. The cameras 360a and 360b may for example be configured to replace the traditional sideview mirrors, or may be provided in addition (as a compliment) to the traditional sideview mirrors. The camera 360c may be provided on top of the towing unit 310 such that it may capture a top of the one or more trailers attached to the towing unit 310. For example, the camera 360c maybe provided on top of a spoiler (370) of the towing unit 310. It is of course envisaged that the exact number of cameras may vary. For example, only one, two or all of the cameras 360a-c may be provided. There may of course also be one or more other cameras provided than the cameras 360a-c, and configured such that they capture other angles of the one or more trailers attached to the towing unit 310.

In other embodiments of e.g. a method as envisaged herein, the one or more images of the vehicle combination may instead (or in addition) be captured by cameras provided elsewhere, such as a camera 360d forming part of a tablet or smartphone 372, or even as a camera 360e forming part of a drone/UAV 374. It is envisaged that as long as a device 400 responsible for carrying out the method 100 may communicate with such cameras in order to receive the one or more images of the vehicle combination, it is not critical in what way, and/or by what camera, the one or more images are captured. The device 400 may, as illustrated in Figure 3A, for example form part of the vehicle/towing unit 310, but may also (instead) form part of e.g. a trailer, the tablet/smartphone 372, or similar equipment including processing circuitry configured to carry out the envisaged method 100. Other examples of cameras that may be used to capture the one or more images of the vehicle combination include e.g. speed cameras, traffic monitoring cameras, road toll cameras, cameras installed on gas-stations or resting places for truck drivers, cameras installed at weighing stations, or similar.

How knowledge about the side area $A_{s2}$ of the added trailer 314 can be used to estimate the projected area

function $A_p(\theta)$ will now be described in more detail with reference in particular to Figures 3B through 3D.

Figure 3B schematically illustrates a vehicle combination 300 driving in a situation where air attacks the vehicle at an angle $\theta$, where $\theta$ is measured as the angle between an air vector $v_a$ and a longitudinal direction/axis of the vehicle combination (as indicated by the dashed line 302). The air vector $v_a$ points in the direction of air attack at the current location of the vehicle combination 300, and has a magnitude proportional to air speed.

Before the change of the exterior shape, the vehicle combination 300 has a previous projected area function $A_p^*(\theta)$ (where the asterisk * is used to denote a "previous" value/function), and the change of the exterior shape (e.g. the addition or removal of one or more trailers) changes the projected area function to a new projected area function $A_p(\theta)$. Herein, it is assumed that being able to estimate this new projected area function $A_p(\theta)$ from one or more images of the vehicle combination 300 is required in order to also estimate a new cross-wind sensitive drag area $[C_dA](\theta)$ of the vehicle combination 300, as the drag area $[C_dA](\theta)$ forms part of the air drag model of the vehicle combination 300 as provided by equation (1).

The drag area $[C_dA](\theta)$ may for example be estimated as

$$[C_dA](\theta) \approx c_1 A_{p(\theta)}, \qquad (2a)$$

$$[C_dA](\theta) \approx \left(c_1 + c_2 \tan(\theta)\right) A_p(\theta), \qquad (2b)$$

$$[C_dA](\theta) \approx \left(c_1 + c_3 \tan^2(\theta)\right) A_p(\theta), \qquad (2c)$$

or

$$[C_dA](\theta) \approx \left(c_1 + c_2 \tan(\theta) + c_3 \tan^2(\theta)\right) A_p(\theta), \qquad (2d)$$

where $A_p(\theta)$ is the projected area function indicating how the projected area on the plane perpendicular to air-attack (for the vehicle combination having the new exterior shape) depends on air-attack angle $\theta$, and where $c_1$, $c_2$ and $c_3$ are shape-parameters that may be kept constant as long as the change of the exterior shape of the vehicle combination 300 only results from a scaling of the overall vehicle combination shape. Using this approach, the drag area function $[C_dA](\theta)$ is updated through a change in the projected area function $A_p(\theta)$.

Unless better information is available, the projected area function $A_p(\theta)$ can be estimated by assuming that the overall shape of the vehicle combination 300 is a cuboid. Such a cuboid 340 is shown in Figure 3B, and has a height $h$, a width $w$, and a length $l$ which match the overall shape of the vehicle combination 300. A side 342 of the cuboid 340 corresponds to a side 322 of the vehicle combination 300, and has a side area $A_s$. Similarly, a front 344 of the cuboid 340 corresponds to a front 324 of the vehicle combination 300 and has a frontal area $A_f$. The side and frontal areas are thus given by $A_s = l \times h$ and $A_f = w \times h$.

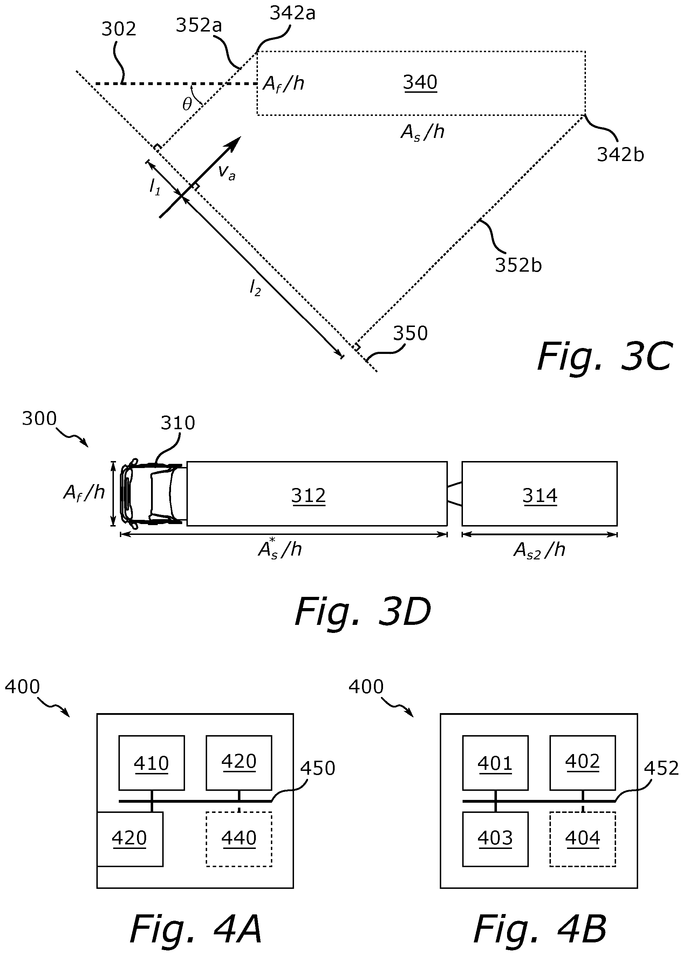

Figure 3C shows the situation in Figure 3B from above, with the vehicle combination 300 removed leaving only the cuboid 340. The projected area of the vehicle combination 300 is found by projecting the cuboid 340 on a plane 350 perpendicular to the air vector $v_a$ (i.e. to the air-attack). It is here assumed that the air vector has no vertical component, i.e. that the wind strikes the vehicle directly from the side and not e.g. from below or from above. The projection on the plane 350 is found by extending two lines 352a and 352b perpendicularly from the plane 350, and such that the two lines 352a and 352b touches a respective corner 342a and 342b of the cuboid 340. This results in a parallel projection of the cuboid 340 on the plane 350, and the resulting projected area is provided by the distance $l' = l_1 + l_2$ times the height h of the cuboid. Using trigonometry, it is found that $l_1 = (A_f/h)\cos(\theta)$ and $l_2 = (A_s/h)\sin(\theta)$, and the projected area is thus provided as

$$A_p(\theta) = h \times l' = h \times (l_1 + l_2) = A_f \cos(\theta) + A_s \sin(\theta). \qquad (3)$$

If it is envisaged that a removal or addition of one or more vehicle units (such as trailers or other towed units) only affects the total side area $A_s$ of the vehicle combination 300, and leaves the front area $A_f$ unchanged, the new projected area function is thus found by modifying $A_s$. In some examples of the envisaged method, a change of the exterior shape of the vehicle combination 300 may include e.g. adding an additional trailer.

Figure 3D schematically illustrates a top-view of such an example, wherein the change of the exterior shape of the vehicle combination 300 includes adding the additional trailer 314 behind the previous trailer 312. If the additional trailer 314 is added such that the gap between the trailer 312 and the additional trailer is sufficiently small (i.e. such that trailer 312 is shadowing the additional trailer 314), the new projected area function may be found by changing the side area $A_s$ above according to $A_s = A_s^* + A_{s2}$, where $A_s^* = A_{s,tractor} + A_{s1}$ is the old combined side area of the vehicle combination 300 including only the towing unit 310 (having side area $A_{s,tractor}$) and trailer 312 (having side area $A_{s1}$), and where $A_{s2}$ is the side area of the additional trailer 314. This solution assumes that the height $h_2$ of the additional trailer 314 matches that ($h_1$) of the trailer 312, and that the frontal area $A_f$ of the vehicle combination 300 remains at least approximately the same.

In the above situation, the new projected area (in the air-attack direction) may be defined as

$$
\begin{aligned}
A_p(\theta) &= A_f \cos(\theta) + (A_s^* + A_{s2})\sin(\theta) \\
&= A_p^*(\theta) + A_{s2}\sin(\theta).
\end{aligned} \tag{4}
$$

After having estimated the new projected area function $A_p(\theta)$, the drag area function $[C_dA](\theta)$ is then estimated using e.g. any of the alternatives provided by equations (2a) through (2d), resulting in an update of the air drag model of the vehicle combination 300 (as provided by equation (1)).

A similar reasoning may of course also be applied if the change of the exterior shape of the vehicle combination 300 instead results from e.g. removing a trailer, thereby reducing the total side area $A_s$ of the vehicle combination with an area $A_{s2}$ (i.e. by making $A_{s2}$ negative).

As envisaged herein, on-line estimation may be used to continuously improve the shape-parameters $c_1$, $c_2$ and $c_3$. For example, if the change of the exterior shape of the vehicle combination 300 is not just a scaling, changes to the shape-parameters $c_1$, $c_2$ and $c_3$ may be required. Such changes may e.g. be based on available information of how the change of the exterior shape impacts the air drag. Exactly how this is performed may depend on the exact model used.

In what follows, a general outline of how to construct a model which is applicable when the change of the exterior shape does not only result in a scaling will now be provided.

For example, it may be assumed that the speed of the air causing the air drag may be divided into two components, namely longitudinal/axial air speed $v_{ax}$ which is opposite the vehicle (combination) longitudinal direction 302, and lateral/radial air speed $v_{ay}$ which is perpendicular to the vehicle (combination) longitudinal direction 302. The drag area function $[C_dA](\theta)$ may then be divided into a shape factor $C_d(\theta)$ and area projection in air-attack angle $A_p(\theta)$, i.e. such that

$$
[C_dA](\theta) = C_d(\theta)\,A_p(\theta). \tag{5}
$$

The shape factor may further be divided into an axial/longitudinal shape factor $C_{dx}(\theta)$ affecting the axial/longitudinal air flow, and a lateral/radial shape factor $C_{dy}(\theta)$ affecting the lateral/radial air flow. These factors may be approximated as

$$
C_{dx}(\theta) \approx c_{x1} + c_{x2}\frac{v_{ay}}{v_{ax}} \tag{6a}
$$

and

$$
C_{dy}(\theta) \approx c_{y1} + c_{y2}\frac{v_{ax}}{v_{ay}}, \tag{6b}
$$

where $c_{x1}$ defines the axial/longitudinal shape factor when there is no lateral/radial air flow, $c_{x2}$ defines the how the lateral/radial air flow affects the axial/longitudinal shape factor, $c_{y1}$ defines the lateral/radial shape factor when there is no axial/longitudinal air flow, and where $c_{y2}$ defines how the axial/longitudinal air flow affects the lateral/radial shape factor. The air drag force $F_a$ may then be written as a sum of an air drag $F_{ax}$ from the axial/longitudinal air flow and an air drag $F_{ay}$ from the lateral/radial air flow, i.e. as

$$F_a = F_{ax} + F_{ay}. \qquad (7)$$

The air drag from the axial/longitudinal air and air drag from the lateral/radial air may be written as

$$F_{ax} = 0.5\rho A_p(\theta)C_{dx}(\theta)v_{ax}^2 \qquad (8a)$$

and

$$F_{ay} = 0.5\rho A_p(\theta)C_{dy}(\theta)v_{ay}^2. \qquad (8b)$$

The parameters $c_1$, $c_2$ and $c_3$ may then be calculated as

$$c_1 = c_{x1}A_f, \qquad (9a)$$

$$c_2 = c_{x2}A_f + c_{y2}A_s, \qquad (9b)$$

and

$$c_3 = cy_1A_s. \qquad (9c)$$

Using this modified approach, when the exterior of the vehicle combination is changed in a way similar to scaling, the parameters $c_1$, $c_2$ and $c_3$ may be adjusted according to equations (9a-c) with the parameters $c_{x1}$, $c_{x2}$, $c_{y1}$ and $c_{y2}$ unchanged and only adjusted according to changes in $A_f$ and $A_s$. On the other hand, if the exterior change is more related to the shape factors, like e.g. when changing an air deflector setting or adding a cover on the side of the vehicle combination in e.g. an attempt to reduce the effects of crosswind-generated air drag, $A_f$ and $A_s$ may be left unchanged and $c_1$, $c_2$ and $c_3$ may be adjusted to the changes in $c_{x1}$, $c_{x2}$, $c_{y1}$ and $c_{y2}$. An exterior change may of course also be such that it causes both a change in scale and a change in scale factors, in which case the parameters $c_1$, $c_2$ and $c_3$ may be adjusted both by changing $A_f$ and $A_s$ and also $c_{x1}$, $c_{x2}$, $c_{y1}$ and $c_{y2}$.

In some embodiments, some of the parameters $c_{x1}$, $c_{x2}$, $c_{y1}$ and $c_{y2}$ may not be needed (and e.g. be assumed to be zero). It is envisaged to use any combination of parameters, although it is often likely that $c_{x1}$ is to be included for most applications, and that also at least one or more of the other tree parameters (or a function of them) $c_{x2}$, $c_{y1}$ and $c_{y2}$ are needed if crosswind sensitivity is to be taken into account.

Importantly, even if consider scaling-only or taking other shape-changes into account, estimating a side area $A_s$ of the vehicle combination remains important, and is provided by using the one or more images of the vehicle combination 300 as envisaged herein.

With reference to Figures 4A and 4B, various embodiments of a device as envisaged herein will now be described in more detail.

Figure 4A schematically illustrates, in terms of a number of functional units, the components of an embodiment of a device 400. The device 400 may e.g. be provided and used in the towing unit 310 (vehicle), or in other parts of the vehicle combination 300. The device 400 may also form part of some other equipment which may communicate with a camera used to capture the one or more images of the vehicle combination 300, such as e.g. the smartphone/table 372, the drone 372, or similar. In a preferred embodiment, the device 400 forms part of the vehicle combination 300, and preferably forms part of the towing unit 310.

The device 400 includes processing circuitry 410. The processing circuitry 410 is provided using any combination of one or more of a suitable central processing unit (CPU), multiprocessor, microcontroller, digital signal processor (DSP), etc., capable of executing software instructions stored in a computer program product (not shown, but envisaged herein) stored on a storage medium 420. The processing circuitry 410 may further be provided as at least one application specific integrated circuit (ASIC), or field-programmable gate array (FPGA), or similar.

Particularly, the processing circuitry 410 is configured to cause the device 400 to perform a set of operations, or steps, such as one or more of steps S101-S104 as disclosed above e.g. when describing the method 100 illustrated in Figure 1. For example, the storage medium 420 may store a set of operations, and the processing circuitry 410 may be configured to retrieve the set of operations from the storage medium 420 to cause the device 400 to perform the set of operations. The set of operations may be provided as a set of executable instructions. Thus, the processing circuitry 410 is thereby arranged to execute methods as disclosed herein e.g. with reference to Figure 1.

The storage medium 420 may also include persistent storage, which, for example, can be any single or combination of magnetic memory, optical memory, solid state memory or even remotely mounted memory. The storage medium 420 may thus provide non-transitory storage, storing computer-readable instructions for the processing circuitry 410.

The device 400 may further include a communications interface 430 for communications with other entities and objects, in order to e.g. receive/obtain one or more of images of the vehicle combination used to estimate the projected area function $A_p(\theta)$, and/or to e.g. detect the change of the exterior shape of the vehicle combination 300. The communications interface 430 may also be configured to e.g. receive information about the one or more cameras needed to estimate e.g. the side area $A_{s2}$ of an added trailer, or e.g. predicted weather information, if the estimated air drag model of the vehicle combination 300 is to be used to e.g. predict an energy consumption while driving along a route for which the predicted weather information is pertinent. The interface 430 may also be used to receive other information about the vehicle combination 300. In other embodiments of the device 400, information about the vehicle combination 300 (such as e.g. information about one or more cameras 360a-360c, their positions relative to the vehicle combination 300, focal lengths of lenses, image sensor sizes, crop-factors, aspect ratios, a homography used for perspective correction, etc.), and/or the weather information may e.g. be stored within the device 400 itself, for example using the storage medium 420. The communication interface 430 may include one or more transmitters and receivers, including analogue and/or digital components, and may utilize e.g. one or more wired and/or wireless connections for this purpose.

The processing circuitry 410 controls the general operation of the device 400 e.g. by sending data and control signals to the communications interface 430 and the storage medium 420, by receiving data and reports from the communications interface 430, and by retrieving data and instructions from the storage medium 420. The device 400 may of course optionally also include other components, here illustrated by the dashed box 440. A communication bus 450 is also provided and connects the various modules/units 410, 420, 430, and 440 (if included), such that they may communicate with each other to exchange information.

Figure 4B schematically illustrates, in terms of a number of functional modules 401-404 (where the module 404 is optional), the components of a device 400 according to one or more embodiments of the present invention. The device 400 includes at least a detect module 401 configured to perform step S101 of the method 100 described with reference to Figure 1, an estimate module 402 configured to perform step S102 of the method 100, and an update module 403 configured to perform step S103 of the method 100. In some embodiments, the device 400 may also include a use module 404 configured to perform step S104 of the method 100 described with reference to Figure 1.

In general terms, each functional module (such as modules 401-404) may be implemented in hardware or in software. Preferably, one or more or all functional modules may be implemented by the processing circuitry 410, possibly in cooperation with the communications interface 430 and/or the storage medium 420. The processing circuitry 410 may thus be arranged to from the storage medium 420 fetch instructions as provided by one or more of the functional modules (e.g. 401-404), and to execute these instructions and thereby perform any steps of the method 100, or any other method envisaged herein, performed by the device 400 as disclosed herein.

In some embodiments, the device 400 may further include additional functional modules (not shown), as needed to perform one or more methods as envisaged herein.

It is also envisaged to provide a vehicle or vehicle combination (such as e.g. the towing unit 310 or vehicle combination 300), where the vehicle or vehicle combination includes the device 400 as described with reference to Figures 4A and 4B.

It is also envisaged to provide a computer program for estimating air drag of/for a vehicle combination. The computer program includes computer code that, when running on a processing circuitry of a device (such as e.g. the processing circuitry 410 of the device 400 described with reference to Figures 4A and 4B), causes the device to perform the various steps of any method (such as e.g. method 100) as described and envisaged herein.

Envisaged is also a computer program product (not shown) in which the above envisaged computer program is stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

In the claims, the words "comprising" and "including" does not exclude other elements, and the indefinite article "a" or "an" does not exclude a plurality. The mere fact that certain features are recited in mutually different dependent claims does not indicate that a combination of these features cannot be used to advantage.

In summary of the present invention, it is provided an improved way of handling a situation in which an exterior shape of a vehicle combination changes, and where an air drag model of the vehicle combination can be updated automatically after detecting such a change, using one or more images of the vehicle combination to estimate a new projected area function $A_p(\theta)$. This facilitates e.g. performing of transport missions along a route which includes one or more changes to the exterior shape of the vehicle combination (such as a pick-up/drop-off of one or more trailer units). This in contrast to commonly available technology, wherein the drag area of the changed vehicle combination must either be obtained by on-line estimation, wind tunnel tests/experiments, numerical simulations, and/or by tabular values.

**Claims**

1.  A computer-implemented method (100) of estimating air drag of a vehicle combination (300), the method comprising:

    - detecting (S101) a change of an exterior shape of the vehicle combination to a new exterior shape;
    - in response to detecting such a change, based on one or more images (200b, 202b) of the vehicle combination captured after the change of the exterior shape, estimating (S102) a projected area function ($A_p(\theta)$) indicating how a projected area of the vehicle combination having the new exterior shape on a plane (350) perpendicular to air-attack ($v_a$) depends on air-attack angle ($\theta$), and
    - using the estimated projected area function to update (S103) a crosswind-sensitive air drag model for the vehicle combination.

2.  The method according to claim 1, wherein the method includes initiating a capture of the one or more images in response to said detecting.

3.  The method according to claim 1 or 2, wherein the method includes receiving the one or more images from at least one camera (360a, 360b, 360c) mounted to/on the vehicle combination.

4.  The method according to any one of claims 1 to 3, wherein estimating the projected area function includes estimating a side area ($A_s$) of the vehicle combination after the change of the exterior shape.

5.  The method according to claim 4, wherein the one or more images depict at least part of a side (322) of the vehicle combination.

6.  The method according to claim 4 or 5, wherein estimating the projected area function includes estimating the projected area after the change of the exterior shape as a projected area of a cuboid (340) on the plane perpendicular to air-attack.

7.  The method according to any one of the preceding claims, wherein the method further includes detecting the change of the exterior shape based on the one or more images (200a-b, 202a-b) of the vehicle combination.

8.  The method according to any one of the preceding claims, wherein detecting the change of the exterior shape includes at least one of receiving a signal from a user interface of the vehicle combination, receiving a signal indicative of a change in air deflector settings, and receiving a signal indicative of a trailer (314) being either connected or detached from the vehicle combination.

9.  The method according to any one of the preceding claims, wherein the method further includes receiving predicted wind information pertinent to a particular route, and using (S104) the updated air drag model for at least one of energy management, range estimation, vehicle combination dynamics, and cruise control, of the vehicle combination along the particular route.

10. A device (400) for estimating air drag of a vehicle combination (300), comprising processing circuitry (410) configured to cause the device to:

    - detect (S101) a change of an exterior shape of the vehicle combination to a new exterior shape;
    - in response to said detection, based on one or more images (200b, 202b) of the vehicle combination captured after the change of the exterior shape,
    estimate (S102) a projected area function ($A_p(\theta)$) indicating how a projected area of the vehicle combination having the new exterior shape on a plane (350) perpendicular to air-attack ($v_a$) depends on air-attack angle ($\theta$), and
    - use (S103) the estimated projected area function to update a crosswind-sensitive air drag model for the vehicle combination.

**11.** The device according to claim 10, wherein the processing circuitry is further configured to cause the device to perform a method (100) according to any one of claims 2 to 9.

**12.** A vehicle (310) or vehicle combination (300), comprising a device (400) according to claim 10 or 11.

**13.** A computer program for estimating air drag of a vehicle combination (300), the computer program comprising computer code that, when running on processing circuitry (410) of a device (400), causes the device to:

- detect (S101) a change of an exterior shape of the vehicle combination to a new exterior shape;
- in response to said detection, based on one or more images (200b, 202b) of the vehicle combination captured after the change of the exterior shape,
estimate (S102) a projected area function ($A_p(\theta)$) indicating how a projected area of the vehicle combination having the new exterior shape on a plane (350) perpendicular to air-attack ($v_a$) depends on air-attack angle ($\theta$), and
- use (S103) the estimated projected area function to update a crosswind-sensitive air drag model for the vehicle combination.

**14.** The computer program according to claim 13, wherein the computer code is further such that it, when running on the processing circuitry of the device, causes the device to perform a method (100) according to any one of claims 2 to 9.

**15.** A computer program product comprising a computer program according to claim 13 or 14, and a computer-readable storage medium on which the computer program is stored.

**Patentansprüche**

**1.** Computer-implementiertes Verfahren (100) zur Schätzung des Luftwiderstands einer Fahrzeugkombination (300), das Verfahren umfassend:

- Erfassen (S101) einer Änderung einer Außenform der Fahrzeugkombination in eine neue Außenform;
- in Reaktion auf das Erfassen einer solchen Änderung, basierend auf einem oder mehreren Bildern (200b, 202b) der Fahrzeugkombination, die nach der Änderung der Außenform aufgenommen wurden, Schätzen (S102) einer projizierten Flächenfunktion ($A_p(\theta)$) die angibt, wie eine projizierte Fläche der Fahrzeugkombination mit der neuen Außenform auf einer Ebene (350) senkrecht zum Luftangriff ($v_a$) vom Luftangriffswinkel ($\theta$) abhängt, und
- Verwenden (S103) der geschätzten projizierten Flächenfunktion zur Aktualisierung eines seitenwindempfindlichen Luftwiderstandsmodells für die Fahrzeugkombination.

**2.** Verfahren nach Anspruch 1, wobei das Verfahren das Einleiten einer Aufnahme des einen oder der mehreren Bilder als Reaktion auf das Erfassen umfasst.

**3.** Verfahren nach Anspruch 1 oder 2, wobei das Verfahren das Empfangen eines oder mehrerer Bilder von mindestens einer Kamera (360a, 360b, 360c) umfasst, die an/auf der Fahrzeugkombination angebracht ist.

**4.** Verfahren nach einem der Ansprüche 1 bis 3, wobei das Schätzen der projizierten Flächenfunktion das Schätzen einer Seitenfläche ($A_s$) der Fahrzeugkombination nach der Änderung der Außenform umfasst.

**5.** Verfahren nach Anspruch 4, wobei das eine oder die mehreren Bilder mindestens einen Teil einer Seite (322) der Fahrzeugkombination darstellen.

**6.** Verfahren nach Anspruch 4 oder 5, wobei das Schätzen der projizierten Flächenfunktion das Schätzen der projizierten Fläche nach der Änderung der Außenform als projizierte Fläche eines Quaders (340) auf der Ebene senkrecht zum Luftangriff umfasst.

**7.** Verfahren nach einem der vorhergehenden Ansprüche, wobei das Verfahren ferner das Erfassen der Änderung der Außenform auf der Grundlage des einen oder der mehreren Bilder (200a-b, 202a-b) der Fahrzeugkombination aufweist.

**8.** Verfahren nach einem der vorhergehenden Ansprüche, wobei das Erfassen der Änderung der Außenform mindestens eines der Folgenden umfasst: Empfangen eines Signals von einer Benutzerschnittstelle der Fahrzeugkombination, Empfangen eines Signals, das eine Änderung der Luftabweisereinstellungen anzeigt, und Empfangen eines Signals, das anzeigt, dass ein Anhänger (314) entweder mit der Fahrzeugkombination verbunden oder von ihr getrennt ist.

**9.** Verfahren nach einem der vorhergehenden Ansprüche, wobei das Verfahren ferner das Empfangen von vorhergesagten Windinformationen, die für eine bestimmte Route relevant sind, und das Verwenden (S104) des aktualisierten Luftwiderstandsmodells für mindestens eines der Folgenden umfasst: Energiemanagement, Reichweitenschätzung, Fahrzeugkombinationsdynamik und Tempomat der Fahrzeugkombination entlang der bestimmten Route.

**10.** Vorrichtung (400) zum Schätzen des Luftwiderstands einer Fahrzeugkombination (300), die eine Verarbeitungsschaltung (410) umfasst, die so konfiguriert ist, dass sie die Vorrichtung veranlasst, Folgendes zu tun:

- Erfassen (S101) einer Änderung einer Außenform der Fahrzeugkombination in eine neue Außenform;
- in Reaktion auf das Erfassen, basierend auf einem oder mehreren Bildern (200b, 202b) der Fahrzeugkombination, die nach der Änderung der Außenform aufgenommen wurden, Schätzen (S102) einer projizierten Flächenfunktion ($A_p(\theta)$) die angibt, wie eine projizierte Fläche der Fahrzeugkombination mit der neuen Außenform auf einer Ebene (350) senkrecht zum Luftangriff ($v_a$) vom Luftangriffswinkel ($\theta$) abhängt, und
- Verwenden (S103) der geschätzten projizierten Flächenfunktion zur Aktualisierung eines seitenwindempfindlichen Luftwiderstandsmodells für die Fahrzeugkombination.

**11.** Vorrichtung nach Anspruch 10, wobei die Verarbeitungsschaltung ferner konfiguriert ist, um die Vorrichtung zu veranlassen, ein Verfahren (100) nach einem der Ansprüche 2 bis 9 durchzuführen.

**12.** Fahrzeug (310) oder Fahrzeugkombination (300), umfassend eine Vorrichtung (400) nach Anspruch 10 oder 11.

**13.** Computerprogramm zum Schätzen des Luftwiderstands einer Fahrzeugkombination (300), wobei das Computerprogramm einen Computercode umfasst, der, wenn er auf einer Verarbeitungsschaltung (410) einer Vorrichtung (400) läuft, die Vorrichtung veranlasst zum:

- Erfassen (S101) einer Änderung einer Außenform der Fahrzeugkombination in eine neue Außenform;
- in Reaktion auf das Erfassen, basierend auf einem oder mehreren Bildern (200b, 202b) der Fahrzeugkombination, die nach der Änderung der Außenform aufgenommen wurden, Schätzen (S102) einer projizierten Flächenfunktion ($A_p(\theta)$) die angibt, wie eine projizierte Fläche der Fahrzeugkombination mit der neuen Außenform auf einer Ebene (350) senkrecht zum Luftangriff ($v_a$) vom Luftangriffswinkel ($\theta$) abhängt, und
- Verwenden (S103) der geschätzten projizierten Flächenfunktion zur Aktualisierung eines seitenwindempfindlichen Luftwiderstandsmodells für die Fahrzeugkombination.

**14.** Computerprogramm nach Anspruch 13, wobei der Computercode ferner so beschaffen ist, dass er, wenn er in der Verarbeitungsschaltung der Vorrichtung läuft, die Vorrichtung veranlasst, ein Verfahren (100) nach einem der Ansprüche 2 bis 9 durchzuführen.

**15.** Computerprogrammprodukt umfassend ein Computerprogramm nach Anspruch 13 oder 14 und ein computerlesbares Speichermedium, auf dem das Computerprogramm gespeichert ist.

**Revendications**

**1.** Procédé mis en œuvre par ordinateur (100) d'estimation de traînée aérodynamique d'une combinaison de véhicules (300), ce procédé comprenant :

- la détection (S101) d'une transformation de forme extérieure de la combinaison de véhicules en une nouvelle forme extérieure ;
- en réaction à la détection d'un tel changement, en se basant sur une ou plusieurs images (200b, 202b) de la combinaison de véhicules capturées après le changement de forme extérieure, l'estimation (S102) d'une fonction de superficie projetée ($A_p(\theta)$) indiquant comment une zone projetée de la combinaison de véhicules ayant la nouvelle forme extérieure sur un plan (350) perpendiculaire à l'attaque de l'air ($v_a$) dépend d'un angle d'attaque

14

de l'air ($\theta$) ,
- utilisation de la fonction de superficie projetée estimée pour actualiser (S103) un modèle de traînée aérodynamique sensible au vent transversal pour la combinaison de véhicules.

2. Procédé selon la revendication 1, ce procédé incluant l'initiation d'une capture de l'image ou des plusieurs images en réaction à ladite détection.

3. Procédé selon la revendication 1 ou 2, ce procédé incluant la réception de l'image ou des plusieurs images de la part d'au moins une caméra (360a, 360b, 360c) montée dans/sur la combinaison de véhicules.

4. Procédé selon l'une quelconque des revendications 1 à 3, dans lequel l'estimation de la fonction de superficie projetée inclut l'estimation d'une superficie latérale ($A_s$) de la combinaison de véhicules après le changement de forme extérieure.

5. Procédé selon la revendication 4, dans lequel l'image ou les plusieurs images représentent au moins une face (322) de la combinaison de véhicules.

6. Procédé selon la revendication 4 ou 5, dans lequel la fonction de superficie projetée inclut l'estimation de la superficie projetée après le changement de forme extérieure sous forme d'une superficie projetée d'un cuboïde (340) sur le plan perpendiculaire à l'attaque de l'air.

7. Procédé selon l'une quelconque des revendications précédentes, ce procédé incluant en outre la détection du changement de forme extérieure en se basant sur l'image ou les plusieurs images (200a-b, 202a-b) de la combinaison de véhicules.

8. Procédé selon l'une quelconque des revendications précédentes, dans lequel la détection du changement de forme extérieure inclut au moins une action parmi la réception d'un signal provenant d'une interface d'utilisateur de la combinaison de véhicules, la réception d'un signal indicatif d'un changement de réglage du déflecteur d'air, et la réception d'un signal indicatif d'une remorque (314) qui est soit connectée à, soit détachée de la combinaison de véhicules.

9. Procédé selon l'une quelconque des revendications précédentes, ce procédé incluant en outre la réception d'informations prédites sur le vent se rapportant à une itinéraire particulier, et l'utilisation (S104) du modèle de traînée aérodynamique pour au moins une fonction parmi la gestion de l'énergie, l'estimation de plage, la dynamique de combinaison de véhicules, et la régulation de vitesse de la combinaison de véhicules le long de l'itinéraire particulier.

10. Dispositif (400) d'estimation de traînée aérodynamique d'une combinaison de véhicules (300) comprenant des circuits de traitement (410) configurés pour amener le dispositif à :

- détecter (S101) une transformation de forme extérieure de la combinaison de véhicules en une nouvelle forme extérieure ;
- en réaction à ladite détection, en se basant sur une ou plusieurs images (200b, 202b) de la combinaison de véhicules capturées après le changement de forme extérieure, estimer (S102) une fonction de superficie projetée ($A_p(\theta)$) indiquant comment une superficie projetée de la combinaison de véhicules ayant la nouvelle forme extérieure sur un plan (350) perpendiculaire à l'attaque de l'air ($v_a$) dépend d'un angle d'attaque de l'air ($\theta$),
- utiliser (S103) la fonction de superficie projetée estimée pour actualiser un modèle de traînée aérodynamique sensible au vent transversal pour la combinaison de véhicules.

11. Dispositif selon la revendication 10, dans lequel les circuits de traitement sont en outre configurés pour amener le dispositif à réaliser un procédé (100) selon l'une quelconque des revendications 2 à 9.

12. Véhicule (310) ou combinaison de véhicules (300) comprenant un dispositif (400) selon la revendication 10 ou 11.

13. Programme informatique permettant d'estimer la traînée aérodynamique d'une combinaison de véhicules (300), ce programme informatique comprenant un code informatique qui, lorsqu'il est exécuté sur des circuits de traitement (410) d'un dispositif (400), amène le dispositif à :

- détecter (S101) une transformation de forme extérieure de la combinaison de véhicules en une nouvelle forme extérieure ;
- en réaction à ladite détection, en se basant sur une ou plusieurs images (200b, 202b) de la combinaison de véhicules capturées après le changement de forme extérieure, estimer (S102) une fonction de superficie projetée ($A_p(\theta)$) indiquant comment une superficie projetée de la combinaison de véhicules ayant la nouvelle forme extérieure sur un plan (350) perpendiculaire à l'attaque de l'air ($v_a$) dépend d'un angle d'attaque de l'air ($\theta$),
- utiliser (S103) la fonction de superficie projetée estimée pour actualiser un modèle de traînée aérodynamique sensible au vent transversal pour la combinaison de véhicules.

**14.** Programme informatique selon la revendication 13, dans lequel le code informatique est tel que, lorsqu'il est exécuté sur les circuits de traitement du dispositif, il amène le dispositif réaliser un procédé (100) selon l'une quelconque des revendications 2 à 9.

**15.** Produit de programmation informatique comprenant un programme informatique selon la revendication 13 ou 14, et un support de stockage lisible par ordinateur sur lequel le programme informatique est sauvegardé.

100

S101 — Change of exterior shape detected?  No

Yes

S102 — Estimate projected area function $A_p(\theta)$ based on image(s) of vehicle combination after change

S103 — Use estimated projected area function to update crosswind-sensitive air drag model

S104 — Use updated air drag model for energy management, range estimation, vehicle dynamics, and/or cruise control.

*Fig. 1*

200a

312

$A_{s1}$

310

*Fig. 2A*

200b

$l_1$

$l_2$

$z_2$  314  $z_1$  312

$A_{s2}$

$A_{s1}$

310

*Fig. 2B*

202a

$y_1$

$l_1$

312

$d_1$

Fig. 2C

202b

$y_2$

314

$l_2$

312

$l_1$

$d_2$

Fig. 2D

Fig. 3A

Fig. 3B

*Fig. 3C*

*Fig. 3D*

*Fig. 4A*

*Fig. 4B*

**EP 4 282 726 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102019211753 A1